(19) Europäisches Patentamt
European Patent Office
Office européen des brevets

(11) **EP 4 362 127 A1**

(12) **EUROPEAN PATENT APPLICATION**

(43) Date of publication:
**01.05.2024 Bulletin 2024/18**

(21) Application number: **23204853.8**

(22) Date of filing: **20.10.2023**

(51) International Patent Classification (IPC):
**H01M 4/04** (2006.01)      **H01M 4/62** (2006.01)
**H01M 10/0525** (2010.01)

(52) Cooperative Patent Classification (CPC):
**H01M 4/622; H01M 4/0404; H01M 10/0525**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.10.2022 KR 20220136756**

(71) Applicants:
• **Samsung SDI Co., Ltd.**
**Yongin-si, Gyeonggi-do 17084 (KR)**
• **IUCF-HYU (INDUSTRY-UNIVERSITY COOPERATION FOUNDATION HANYANG UNIVERSITY)**
**Seoul 04763 (KR)**

(72) Inventors:
• **PARK, Keemin**
**04762 Seoul (KR)**

• **JUNG, Hyeseung**
**17084 Yongin-si (KR)**
• **AN, Hoyong**
**17084 Yongin-si (KR)**
• **LEE, Kyuseo**
**17084 Yongin-si (KR)**
• **HAN, Seung-Hun**
**17084 Yongin-si (KR)**
• **KIM, Soochan**
**17084 Yongin-si (KR)**
• **CHO, Chaewoong**
**17084 Yongin-si (KR)**
• **MYEONG, Seungcheol**
**04761 Seoul (KR)**
• **SONG, Taeseup**
**03180 Seoul (KR)**
• **PAIK, Ungyu**
**06289 Seoul (KR)**

(74) Representative: **Marks & Clerk LLP**
**15 Fetter Lane**
**London EC4A 1BW (GB)**

(54) **METHOD OF MANUFACTURING ELECTRODE FOR RECHARGEABLE LITHIUM BATTERY, ELECTRODE MANUFACTURED THEREFROM, AND RECHARGEABLE LITHIUM BATTERY INCLUDING THE ELECTRODE**

(57)      Disclosed are a method of manufacturing an electrode for a rechargeable lithium battery, and an electrode manufactured therefrom, and a rechargeable lithium battery including the electrode, the method of manufacturing an electrode for a rechargeable lithium battery including mixing an electrode active material and a first ionic polymer to prepare a first slurry; mixing the first slurry and a second ionic polymer to prepare a second slurry; mixing the second slurry and a water-soluble binder to prepare an electrode active material layer slurry; coating the electrode active material layer slurry on a current collector, drying and compressing to manufacture an electrode for a rechargeable lithium battery, wherein an amount of the first ionic polymer is about 20 to about 90 wt% based on a total amount of 100 wt% of the first ionic polymer and the second ionic polymer.

FIG. 7B

1st mixing → 2nd mixing with additional Na-CMC → Slurry A
High CMC adsorption → superior dispersibility

EP 4 362 127 A1

Description

BACKGROUND

1. Field

A method of manufacturing an electrode for a rechargeable lithium battery and an electrode manufactured therefrom, and a rechargeable lithium battery including the electrode are disclosed.

2. Description of the Related Art

The development of rechargeable lithium batteries with high energy and power densities is essential to satisfy the demanding requirements of portable electronic devices, electric vehicles, and energy storage systems.

Although studies have been conducted on various active materials of the rechargeable lithium battery with high gravimetric and volumetric capacities, such as a polyanion-type positive electrode and a Si negative electrode, their commercial use has been restrained due to unsatisfactory electrochemical characteristics.

On the other hand, significant increase in the energy density of a rechargeable lithium battery has been achieved by employing electrodes with high areal capacity. However, high pressure should be applied to the electrode using roll calendering for the increase of the electrode density, which causes degradation of electrochemical characteristics due to low Li-ion kinetics with decreased pore size and volume and large polarization in the electrode.

SUMMARY

Li-ion kinetics of the electrode may be enhanced by controlling a microstructure of the electrode. The microstructure with uniform pore distribution enables facile movement of the electrolyte through the pores, which reduces the ionic resistance ($R_{ion}$) of the rechargeable lithium battery.

Since the microstructure of the electrode is closely related to the dispersibility of the slurry for forming an electrode, research on controlling the dispersibility of the slurry for forming an electrode is actively underway.

On the other hand, another important factor affecting Li-ion kinetics is Li-ion transfer in the interphase between active material and electrolyte, which is mainly attributed to Li-ion desolvation and conducting through the solid-electrolyte interphase (SEI) layer. Accordingly, the Li-ion kinetics of the electrode is influenced by the physicochemical properties of the SEI layer. The SEI layer formed on the surface of the active material during the operation of rechargeable lithium batteries is determined not only by the electrolytes but also by a binder.

An embodiment provides a method of manufacturing an electrode for a rechargeable lithium battery that can improve Li-ion kinetics by increasing the adsorption of a binder as a factor affecting the dispersibility of a slurry for forming an electrode.

Another embodiment provides an electrode manufactured according to the above manufacturing method and a rechargeable lithium battery including the same.

According to an embodiment, a method of manufacturing an electrode for a rechargeable lithium battery includes

mixing an electrode active material and a first ionic polymer to prepare a first slurry,
mixing the first slurry and a second ionic polymer to prepare a second slurry,
mixing the second slurry and a water-soluble binder to prepare an electrode active material layer slurry, and
coating the electrode active material layer slurry on a current collector, drying and compressing to manufacture an electrode for a rechargeable lithium battery,
wherein an amount of the first ionic polymer is about 20 to about 90 wt% based on a total amount of 100 wt% of the first ionic polymer and the second ionic polymer.

According to another embodiment, an electrode for a rechargeable lithium battery manufactured by the aforementioned manufacturing method is provided.

According to another embodiment, a rechargeable lithium battery including the electrode for the rechargeable lithium battery is provided.

At least some of the above and other features of the invention are set out in the claims.

The electrode manufactured according to the aforementioned manufacturing method has improved electrochemical performance and can be usefully applied to a rechargeable lithium battery.

## BRIEF DESCRIPTION OF THE DRAWINGS

FIGS. 1 to 4 are schematic views illustrating rechargeable lithium batteries according to embodiments.

FIG. 5 is a graph showing adsorption amounts of sodium carboxymethyl cellulose (Na-CMC) on graphite of Slurries A1 to A7 and Comparative Slurries C1 to C8.

FIG. 6 is a graph showing dynamic mobility of Comparative Slurries C2 to C7 and Slurries A1 to A6 according to the content of Na-CMC near pH 7.5.

FIGS. 7A and 7B are schematic views showing the adsorption state of graphite and Na-CMC during the manufacturing process of comparative slurry C and slurry A, respectively.

FIG. 8A is a graph showing the particle size distribution of slurry A and comparative slurry C, and FIG. 8B is a graph showing the cumulative particle size distribution of slurry A and comparative slurry C.

FIG. 9 is a graph showing pore size distributions of the negative electrode manufactured using slurry A and comparative slurry C.

FIG. 10 is a graph showing measurement results of the MacMullin number ($N_M$) of the negative electrode according to Example A, Example B, and Comparative Example C.

FIG. 11 is a graph showing the charge transfer activation energy ($E_{ct}$) measurement results of half-cells according to Example AH and Example BH.

FIG. 12 shows electrochemical impedance spectroscopy (EIS) spectra of a half-cell according to Example AH and a half-cell according to Example BH after a formation cycle at 25 °C.

FIGS. 13A, 13B, 14A, and 14B show the results of high-resolution X-ray photoelectron spectroscopy (XPS) analysis of the negative electrode according to Example AH and the negative electrode according to Example BH after 10 cycles at 1.0 C.

FIG. 15 is a graph showing EIS spectra of half-cells according to Example AH and Comparative Example CH.

FIG. 16A shows EIS spectra of the coin-type full-cells according to Example AF and Comparative Example CF after two formation cycles at 0.1 C and 0.2 C.

FIG. 16B shows EIS spectra of the coin-type full-cells according to Example AF and Example BF after two formation cycles at 0.1 C and 0.2 C.

FIG. 17A is a graph showing capacity retention rates of full-cells according to Example AF and Comparative Example CF after 100 cycles at 2.0 C.

FIG. 17B is a graph showing capacity retention rates after 100 cycles at 2.0 C for full-cells according to Example AF and Example BF.

FIG. 18A is a graph showing the capacity retention rates according to the charging rate of full-cells according to Example AF and Comparative Example CF.

FIG. 18B is a graph showing capacity retention rates according to the charging rate of full-cells according to Example AF and Example BF.

## DETAILED DESCRIPTION

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe example embodiments only, and is not intended to limit the present disclosure. The singular expression includes the plural expression unless the context clearly dictates otherwise.

As used herein, "combination thereof" means a mixture, laminate, composite, copolymer, alloy, blend, reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter may be measured by a method well known to those skilled in the art, for example, may be measured by a particle size analyzer, or may be measured by a transmission electron micrograph or a scanning electron micrograph. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D50) of particles having a cumulative volume of 50 volume% in the particle size distribution.

Herein, "or" is not to be construed as an exclusive meaning, for example, "A or B" is construed to include A, B, A+B, and the like.

As used herein, the term "and/or" includes any and all combinations of one or more of the associated listed items. Expressions such as "at least one of," when preceding a list of elements, modify the entire list of elements and do not modify the individual elements of the list. As used herein, the term "substantially" and similar terms are used as terms of approximation and not as terms of degree, and are intended to account for the inherent deviations in measured or calculated values that would be recognized by those of ordinary skill in the art. Also, the term "about" and similar terms, when used herein in connection with a numerical value or a numerical range, are inclusive of the stated value and mean within an acceptable range of deviation for the particular value as determined by one of ordinary skill in the art, considering the measurement in question and the error associated with measurement of the particular quantity (e.g., the limitations of the measurement system). For example, "about" may mean within one or more standard deviations, or within $\pm$ 30%, 20%, 10%, 5% of the stated value. Also, any numerical range recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

Hereinafter, a method of manufacturing an electrode for a rechargeable lithium battery according to an embodiment will be described.

A method of manufacturing an electrode for a rechargeable lithium battery includes

mixing an electrode active material and a first ionic polymer to prepare a first slurry,
mixing the first slurry and a second ionic polymer to prepare a second slurry,
mixing the second slurry and a water-soluble binder to prepare an electrode active material layer slurry, and
coating the electrode active material layer slurry on a current collector, drying and compressing to manufacture an electrode for a rechargeable lithium battery,
wherein an amount of the first ionic polymer is about 20 to about 90 wt% based on a total amount of 100 wt% of the first ionic polymer and the second ionic polymer.

The electrode active material may be a negative electrode active material or a positive electrode active material.

The negative electrode active material may include a carbon-based negative electrode active material that is a material that reversibly intercalates/deintercalates lithium ions, a silicon-carbon composite, or a combination thereof.

The carbon-based negative electrode active material may include crystalline carbon, amorphous carbon, or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The carbon-based negative electrode active material may have an average particle diameter (D50) of, for example, about 1 $\mu$m to about 50 $\mu$m, for example, about 1 $\mu$m to about 40 $\mu$m, about 1 $\mu$m to about 30 $\mu$m, about 1 $\mu$m to about 25 $\mu$m, about 1 $\mu$m to about 20 $\mu$m, about 2 $\mu$m to about 50 $\mu$m, about 5 $\mu$m to about 50 $\mu$m, about 10 $\mu$m to about 50 $\mu$m, or about 15 $\mu$m to about 50 $\mu$m. When the carbon-based negative electrode active material with the particle diameter ranges is used, energy density may be increased, while sufficient voids between particles may be simultaneously secured. Herein, the average particle diameter is obtained by randomly selecting 20 carbon-based negative electrode active material particles from an electron microscope image of the electrode to measure each particle diameter and obtain a particle diameter distribution therefrom and then, taking a particle diameter (D50) at 50 volume% of a cumulative volume from the particle diameter distribution.

The silicon-carbon composite may include a silicon-based material and amorphous carbon or crystalline carbon in addition to the silicon-based material and the amorphous carbon. Herein, the silicon-based material may be silicon (Si) or a silicon oxide ($SiO_x$, $0 < x < 2$).

When the silicon-carbon composite includes the silicon-based material and the amorphous carbon, the silicon-carbon composite may be an assembly of the silicon-based material and the amorphous carbon or the silicon-based material coated with the amorphous carbon on the surface. Herein, the silicon-based material and the amorphous carbon may be mixed in a weight ratio of about 1 : 99 to about 60 : 40.

When the silicon-carbon composite includes the crystalline carbon in addition to the silicon-based material and the amorphous carbon, the crystalline carbon and the silicon-based material are assembled to form an assembly, on which the amorphous carbon may be coated. Herein, a content of the silicon-based material may be about 1 wt% to about 60 wt%, or, for example, about 3 wt% to about 60 wt% based on 100 wt% of the total silicon-based negative electrode active material. In addition, in the silicon-based negative electrode active material, a content of the amorphous carbon may be about 20 wt% to about 60 wt% based on 100 wt% of the total silicon-based negative electrode active material, and a content of the crystalline carbon may be about 20 wt% to about 60 wt% based on 100 wt% of the total silicon-based negative electrode active material.

The silicon may have a particle diameter of about 10 nm to about 30 $\mu$m, for example, about 10 nm to about 1000 nm, or about 20 nm to about 150 nm.

When the amorphous carbon is coated to form a layer, the amorphous carbon may have a thickness of about 5 nm to about 100 nm.

The negative electrode active material may include other negative electrode active materials in addition to the negative electrode active materials described above. For example, the negative electrode active material layer may further include a silicon-based negative electrode active material and/or a tin-based negative electrode active material. In this case, the capacity of the negative electrode can be maximized.

The silicon-based negative electrode active material may include silicon, a silicon-carbon composite, $SiO_x$ (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof).

The tin-based negative electrode active material may be, for example, tin, tin oxide (e.g., $SnO_x$ (0 < x ≤ 2 or 1 < x ≤ 2)), a Sn-R alloy (where R is selected from an alkali metal, an alkaline-earth metal, a Group 13 element, a Group 14 element (excluding Sn), a Group 15 element, a Group 16 element, a transition metal, a rare earth element, and a combination thereof), or a combination thereof. The elements Q and R may include, for example, Mg, Ca, Sr, Ba, Ra, Sc, Y, Ti, Zr, Hf, Rf, V, Nb, Ta, Db, Cr, Mo, W, Sg, Tc, Re. , Bh, Fe, Pb, Ru, Os, Hs, Rh, Ir, Pd, Pt, Cu, Ag, Au, Zn, Cd, B, Al, Ga, Sn, In, Tl, Ge, P, As, Sb , Bi, S, Se, Te, or Po.

The silicon-based negative electrode active material and/or tin-based negative electrode active material may be included in an amount of about 0 wt% to about 60 wt%, about 1 wt% to about 50 wt%, about 1 wt% to about 40 wt%, about 1 wt% to about 30 wt%, or about 5 wt% to about 20 wt% based on 100 wt% of the negative electrode active material in the negative electrode active material layer. Herein, a cost may not only be reduced, but also high capacity may be achieved.

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free lithium nickel-manganese-based oxide, or a combination thereof.

As an example, the following compounds represented by any one of the following Chemical Formulas may be used. $Li_aA_{1-b}X_bO_{2-c}D_c$ (0.90≤a≤1.8, 0≤b≤0.5, and 0≤c≤0.05); $Li_aMn_{2-b}X_bO_{4-c}D_c$ (0.90≤a≤1.8, 0≤b≤0.5, and 0≤c≤0.05); $Li_aNi_{1-b-c}Co_bX_cO_{2-\alpha}D_\alpha$ (0.90≤a≤1.8, 0≤b≤0.5, 0≤c≤0.5, and 0<α<2); $Li_aNi_{1-b-c}Mn_bX_cO_{2-\alpha}D_\alpha$ (0.90≤a≤1.8, 0≤b≤0.5, 0≤c≤0.5, and 0<α<2); $Li_aNi_bCo_cL^1_dG_eO_2$ (0.90≤a≤1.8, 0≤b≤0.9, 0≤c≤0.5, 0≤d≤0.5, and 0≤e≤0.1); $Li_aNiG_bO_2$ (0.90≤a≤1.8 and 0.001 ≤b≤0.1); $Li_aCoG_bO_2$ (0.90≤a≤1.8 and 0.001 ≤b≤0.1); $Li_aMn_{1-b}G_bO_2$ (0.90≤a≤1.8 and 0.001 ≤b≤0.1); $Li_aMn_2G_bO_4$ (0.90≤a≤1.8 and 0.001 ≤b≤0.1); $Li_aMn_{1-g}G_gPO_4$ (0.90≤a≤1.8 and 0≤g≤0.5); $Li_{(3-f)}Fe_2(PO_4)_3$(0≤f≤2); or $Li_aFePO_4$(0.90≤a≤1.8).

In the above chemical formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and $L^1$ is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

The electrode active material is prepared in a slurry state, coated on a current collector, dried, and compressed to manufacture an electrode.

In an embodiment, the slurry is prepared by a stepwise mixing process including a first mixing process of mixing an electrode active material and a first ionic polymer to prepare a first slurry, and a second mixing process of mixing the first slurry and a second ionic polymer to prepare a second slurry. This stepwise mixing process can improve dispersibility of the electrode active material. When the dispersibility of the electrode active material is improved, electrodes with uniform pore distribution may be manufactured, and an electrode microstructure with uniform pore distribution allows the electrolyte to move easily through the pores, resulting in reducing in the ionic resistance ($R_{ion}$) of rechargeable lithium batteries.

The first ionic polymer and the second ionic polymer may be cellulose-based compounds. The cellulose-based compound may include, for example, carboxylmethyl cellulose, hydroxypropylmethyl cellulose, methyl cellulose, an alkali metal salt thereof, or a combination thereof. The alkali metal may be Li, Na, K, etc.

CMC is a cellulose derivative including β-linked glucopyranose monomers with varying degrees of substitution (DS) of carboxymethyl ($-CH_2COOH$) groups. The carboxymethyl groups of CMC, which are derived from hydroxyl ($-OH$) groups on cellulose, contribute to the aqueous solubility of CMC compared with insoluble cellulose. The carboxymethyl and hydroxyl groups of CMC form hydrogen bonding with water, allowing CMC to act as a thickener in an aqueous slurry. The carboxymethyl group of CMC can be dissociated into a carboxylate anion ($-CH_2COO^-$) in an aqueous medium. Therefore, CMC adsorbed on a graphite surface via hydrophobic interaction creates a negative charge on graphite, making an electrostatically repulsive force between graphite particles. This repulsive force can improve the dispersibility of a slurry by suppressing the agglomeration of electrode active materials, for example, graphite particles that are negative electrode active materials.

An amount of the first ionic polymer is about 20 to about 90 wt% based on a total amount of 100 wt% of the first ionic polymer and the second ionic polymer, and, for example, the amount of the first ionic polymer may be greater than or equal to about 25 wt%, greater than or equal to about 30 wt%, greater than or equal to about 35 wt%, greater than or equal to about 40 wt%, greater than or equal to about 45 wt%, or greater than or equal to about 50 wt%. In an embodiment, an amount of the first ionic polymer may be about 40 to about 60 wt% based on a total amount of 100 wt% of the first ionic polymer and the second ionic polymer. Within the above ranges, the first ionic polymer may be adsorbed to the electrode active material and improve the dispersibility of the electrode active material in the above-described secondary mixing process.

The total amount of the first ionic polymer and the second ionic polymer may be about 0.1 wt% to about 3 wt%, or about 0.1 wt% to about 1.5 wt% based on 100 wt% of the electrode active material layer.

The second slurry and a water-soluble binder are mixed to prepare an electrode active material layer slurry, and the electrode active material layer slurry is coated on a current collector followed by drying and compressing to manufacture an electrode for a rechargeable lithium battery.

The first ionic polymer and the second ionic polymer may be the same or different. In an embodiment, the first ionic polymer may be a lithium-containing cellulose-based compound, and the second ionic polymer may be a sodium-containing cellulose-based compound. In this case, a content of LiF, which is advantageous for lithium ion transfer as a component of the SEI layer, increases, which reduces the charge transfer activation energy ($E_{ct}$), and further improves Li-ion kinetics.

The water-soluble binder may include a rubber-based binder, a polymer resin binder, or a combination thereof. The rubber-based binder may include, for example, a styrene-butadiene rubber, an acrylated styrene-butadiene rubber, an acrylonitrile-butadiene rubber, an acrylic rubber, a butyl rubber, a fluorine rubber, or a combination thereof. The polymer resin binder may include, for example, polyethylene oxide, polyvinylpyrrolidone, polyacrylonitrile, an ethylene propylene diene copolymer, polyvinylpyridine, chlorosulfonated polyethylene, latex, a polyester resin, an acrylic resin, a phenol resin, an epoxy resin, a polyvinyl alcohol, or a combination thereof.

Since the rubber-based binder has high flexibility, excellent heat resistance, and strong bonding force, electrodes containing it can have improved physicochemical properties. In particular, among the rubber-based binders, the aromatic ring of SBR interacts with the Cu current collector to provide adhesion between the electrode active material layer and the Cu current collector, and serves as a primary binder in the electrode.

The water-soluble binder may be included in an amount of about 0.1 wt% to about 10 wt%, for example, about 0.5 wt% to about 5 wt%, or about 1 wt% to about 3 wt%, based on 100 wt% of the electrode active material layer.

The content of the electrode active material may be about 85 wt% to about 99 wt%, about 90 wt% to about 99 wt%, or about 95 wt% to about 98 wt% based on a total weight of the electrode active material layer.

The electrode active material layer may optionally include a conductive material in addition to the electrode active material and polymer (e.g. water-soluble) binder. The conductive material may be used to impart conductivity (e.g., electrical conductivity) to the electrode. Any material that does not cause chemical change (e.g., does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder or a metal fiber; a conductive polymer such as a polyphenylene derivative; or a mixture thereof. The conductive material may be included in an amount of about 0.1 wt% to about 10 wt%, for example, about 0.5 wt% to about 5 wt%, or about 1 wt% to about 3 wt% based on 100 wt% of the electrode active material layer.

A thickness of the electrode active material layer is not particularly limited but may be about 20 μm to about 500 μm according to intended uses or standards, for example, about 20 μm to about 300 μm, about 20 μm to about 200 μm, or about 30 μm to about 100 μm.

The current collector is not particularly limited but when the electrode is a negative electrode, the current collector may be, for example, a copper foil, a nickel foil, a stainless steel foil, a titanium foil, or a polymer substrate coated with a conductive metal. When the electrode is a positive electrode, Al may be used as the current collector, but it is not limited thereto.

The electrode manufactured in the above manufacturing method has improved electrochemical performance and thus may be usefully applied to rechargeable lithium batteries.

The MacMullin number ($N_M$) of the electrode calculated using Equation 1 may be less than or equal to about 25 or less than or equal to about 24:

[Equation 1]

$$N_M = \frac{R_{ion} \cdot A \cdot \sigma_0}{d} \quad (1)$$

wherein $R_{ion}$ is the ionic resistance of the electrode ($\Omega$), A is an area of the electrode (cm$^2$), $\sigma_o$ is the ion conductivity of the electrolyte (S cm$^{-1}$), and d is the thickness of the electrode (μm). $R_{ion}$ is obtained from EIS (Electrochemical

Impedance Spectroscopy) analysis at an open-circuit voltage of a cell with a frequency range of 100 kHz to 1Hz and an amplitude of 20 mV by using Potentiostat (ZIVE BP2A, Won-ATech Co., Ltd., Korea). The ionic conductivity is measured at room temperature (25 °C).

An embodiment provides a rechargeable lithium battery including a negative electrode, a positive electrode, and an electrolyte. In the rechargeable lithium battery, at least one of the negative electrode and the positive electrode is an electrode manufactured according to the above-described manufacturing method.

The electrolyte may include a non-aqueous organic solvent and a lithium salt.

The non-aqueous organic solvent serves as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond), and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethane sulfonate, lithium difluorobis(oxalato)phosphate (LiDFOB), and lithium bis(oxalato) borate (LiBOB).

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film including any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, SrTiOs, BaTiOs, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

The rechargeable lithium battery may be classified into cylindrical, prismatic, pouch, or coin-type batteries, and the like depending on their shape.

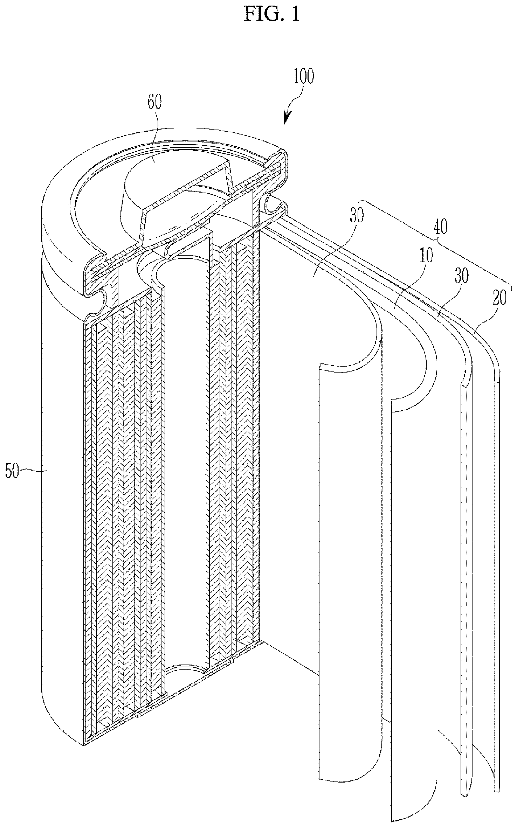

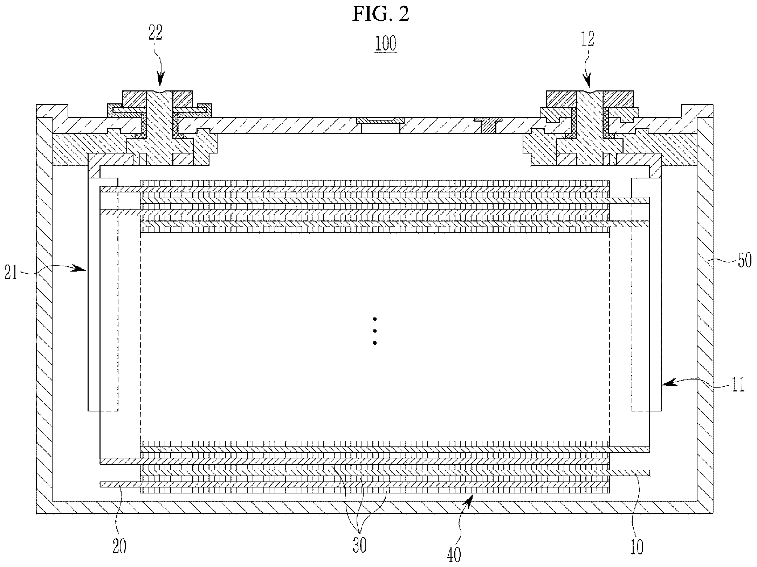

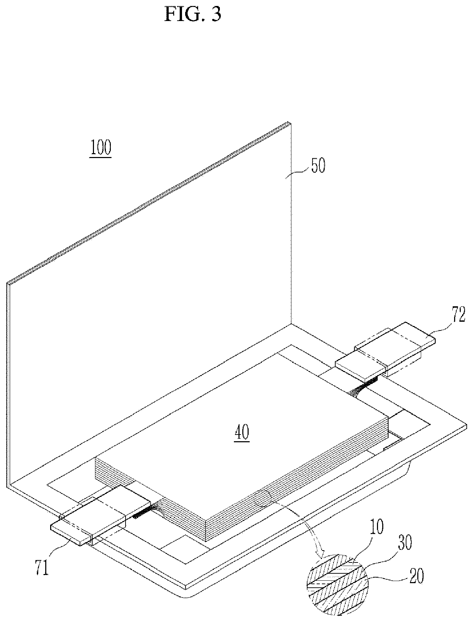

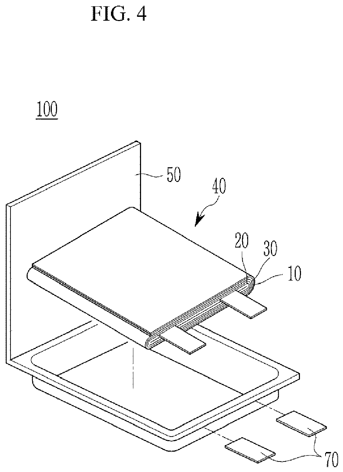

FIGS. 1 to 4 are schematic views illustrating rechargeable lithium batteries according to embodiments. FIG. 1 shows a cylindrical battery, FIG. 2 shows a prismatic battery, and FIGS. 3 and 4 show pouch-type batteries. Referring to FIGS. 1 to 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte (not shown). The rechargeable lithium battery 100 may include a sealing member 60 sealing the case 50, as shown in FIG. 1. In FIG. 2, the rechargeable lithium battery 100 may include a positive lead tab 11, a positive terminal 12, a negative lead tab 21, and a negative terminal 22. As shown in FIGS. 3 and 4, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to an embodiment may be applied to automobiles, mobile phones, and/or various types of electric devices, as non-limiting examples.

The following Examples and Comparative Examples are provided in order to highlight characteristics of one or more embodiments, but it will be understood that the Examples and Comparative Examples are not to be construed as limiting the scope of the embodiments. Further, it will be understood that the embodiments are not limited to the particular details described in the Examples and Comparative Examples.

In the following evaluation examples, electrochemical measurements of all cells were performed using a battery cycle tester (TOSCAT 3000, Toyo System, Japan).

Electrochemical impedance spectroscopy (EIS) spectra were observed at an open-circuit voltage (OCV) of each cell in a frequency window from 100 kHz to 1 Hz and 20 mV amplitude by using a potentiostat (ZIVE BP2A, Won-A tech, Korea).

**Preparation Example A: Preparation of Slurry A**

10 g of graphite and 0.5 wt% of Na-CMC (based on 100 wt% of a solid content of a negative electrode active material layer) were primarily mixed at 2,000 rpm for 2 minutes, and then, 0.5 wt% of Na-CMC was added again to the obtained graphite mixture and then, secondarily mixed at 2,000 rpm for 2 minutes to prepare Slurry A.

**Preparation Example B: Preparation of Slurry B**

10 g of graphite and 0.5 wt% of Li-CMC (based on 100 wt% of a solid content of a negative electrode active material layer) were primarily mixed at 2,000 rpm for 2 minutes, and then, 0.5 wt% of Na-CMC was added to the obtained graphite mixture and then, secondarily mixed at 2,000 rpm for 2 minutes to prepare Slurry B.

Li-CMC was prepared according to a method described in Ind. Eng. Chem. Res., 57(2018) 8895 to 8901 by H. Park, D. Lee, and T. Song.

**Comparative Preparation Example C: Preparation of Comparative Slurry C**

10 g of graphite and 1.0 wt% of Na-CMC (based on 100 wt% of a solid content of a negative electrode active material layer) were mixed at 2,000 rpm for 4 minutes by using a Thinky mixer to prepare Comparative Slurry C.

**Example A: Manufacture of Negative Electrode**

Slurry A of Preparation Example A was mixed with 40 wt% SBR emulsion at 2,000 rpm for 2 minutes to prepare slurry for an electrode active material layer. A weight ratio of graphite: Na-CMC: SBR based on the solid states was 97.8:1.0:1.2. The slurry for an electrode active material layer was cast at a loading level of 9.5 mg cm$^{-2}$ on a Cu current collector (a thickness: 8 $\mu$m) by using a doctor blade and then, dried at 110 °C for 20 minutes. After the drying, in order to achieve a target density of 1.6 g cc-' at an electrode, calendering was conducted to manufacture a negative electrode.

**Example B: Manufacture of Negative Electrode**

Slurry B of Preparation Example B was mixed with 40 wt% SBR emulsion at 2,000 rpm for 2 minutes to prepare slurry for an electrode active material layer. A weight ratio of graphite: Li-CMC: Na-CMC: SBR based on the solid states was 97.8:0.5:0.5:1.2. The slurry for an electrode active material layer was cast at a loading level of 9.5 mg cm$^{-2}$ on a Cu current collector (a thickness: 8 $\mu$m) by using a doctor blade and then, dried at 110°C for 20 minutes. After the drying, in order to achieve a target density of 1.6 g cc-' at an electrode, calendering was conducted to manufacture a negative electrode.

**Comparative Example C: Manufacture of Negative Electrode**

Comparative Slurry C of Comparative Preparation Example C was mixed with 40 wt% SBR emulsion at 2,000 rpm for 2 minutes to prepare slurry for an electrode active material layer. A weight ratio of graphite: Na-CMC: SBR based on the solid states was 97.8:1.0:1.2. Herein, a loading amount of a negative electrode active material layer formed thereof on the Cu current collector was 9.5 mg cm$^{-2}$, and a negative electrode was manufactured through calendaring after drying to have a target density of 1.6 g cc$^{-1}$.

**Example AH, Example BH and Comparative Example CH: Manufacture of Half-cell**

The negative electrodes of Examples A and B and Comparative Example C were dried at 120 °C for 4 hours in a vacuum oven before manufactured into each battery cell.
Each of the negative electrodes of Examples A and B and Comparative Example C as a working electrode and a lithium metal (a thickness: 200 $\mu$m) as a counter electrode were used to manufacture each (2032 round type) half-cell.

**Example AF, Example BF, and Comparative Example CF: Manufacture of Full-cell**

Each of the negative electrodes of Examples A and B and Comparative Example C, before being manufactured into a cell, was dried at 120 °C for 4 hours in a vacuum oven. A positive electrode with an areal capacity of 3 mAh cm$^{-2}$ was manufactured by mixing $LiCoO_2$ (LCO), a PVdF binder, and carbon black in a weight ratio of 97:1.5:1.5 in N-methyl pyrrolidone to prepare slurry for a positive electrode active material layer, coating this slurry on an Al foil, and then, drying and compressing it. This positive electrode was used with each negative electrode of Examples A and B and Comparative Example C and an electrolyte was injected to manufacture a full cell (an N/P ratio: 1.1/1).
The electrolyte (Starlyte from Panax Etec Co., Ltd., Busan, Korea) was prepared by dissolving 1.15 M $LiPF_6$ in ethylene carbonate/diethyl carbonate/dimethyl carbonate (EC/DEC/DMC = 3/5/2 volume ratio) and then, adding a fluoroethylene carbonate additive (5 wt% of FEC). A polypropylene (PP) separator (a thickness: 15 $\mu$m) was used.

**Evaluation Example 1: Evaluation of Adsorption and Dynamic Mobility of Graphite/Na-CMC Slurry**

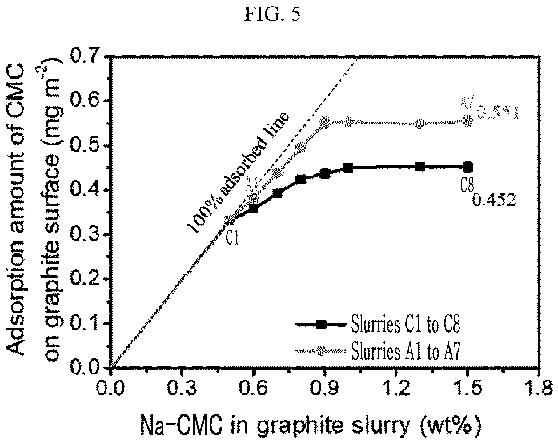

Slurries A1 to A7 were prepared by primarily mixing 10 g of graphite with 0.5 wt% of sodium carboxylmethyl cellulose (Na-CMC, Mw: 250,000, substitution: 1.2) (based on 100 wt% of a solid content of a negative electrode active material layer) as a first ionic polymer at 2,000 rpm for 3 minutes to prepare first slurry and then, secondarily mixing Na-CMC (0.1, 0.2, 0.3, 0.4, 0.5, 0.8, and 1.0 wt%) as a second ionic polymer therewith at 2,000 rpm for 3 minutes to prepare second slurry.
Comparative Slurries C1 to C8 were obtained by mixing 10 g of graphite respectively with 0.5, 0.6, 0.7, 0.8, 0.9, 1.0, 1.3, and 1.5 wt% of Na-CMC (based on 100 wt% of a solid content of a negative electrode active material layer) at 2,000 rpm for 6 minutes with a Thinky mixer.
Slurries A1 to A7 and Comparative Slurries C1 to C8 were equilibrated through stirring for 12 hours. Subsequently, each slurry was centrifuged at 25,000 rpm for 30 minutes (Ultracentrifuge, Optima LE-80K, BECKMAN Coulter, USA). A supernatant obtained therefrom was analyzed by using a TOC (Total Organic Carbon) analyzer (Shimadzu Corp., Japan). The obtained results were averaged and then, corrected for background TOC by using a blank solution (graphite suspension to which Na-CMC was not added). An adsorption isotherm was derived from a difference between an addition amount of Na-CMC and a remaining amount thereof in the supernatant.
Slurries A1 to A7 and Comparative Slurries C1 to C8 were evaluated with respect to an adsorption amount of Na-CMC on the graphite, and the results are shown in FIG. 5. FIG. 5 is a graph showing Na-CMC adsorption amounts of Slurries A1 to A7 and Comparative Slurries C1 to C8 on the graphite.

Referring to FIG. 5, Comparative Slurries C1 to C8, when 0.5 wt% of Na-CMC was mixed (Slurry C1), all Na-CMC was adsorbed on the graphite surface. However, when Na-CMC was more mixed (Slurries C2 to C8), Na-CMC was not all adsorbed on the graphite surface but remained in the slurry, which acts as a thickener. The more Na-CMC, the larger Na-CMC adsorption amount on the graphite surface, but when the content of Na-CMC in the slurry was 1.0 wt%, a Na-CMC reached saturated adsorption amount of 0.452 mg m$^{-2}$.

On the other hand, Slurries A1 to A7, when the content of Na-CMC was 0.9 wt%, reached a saturated adsorption amount of 0.551 mg m$^{-2}$.

The results that Slurries A1 to A7 reached a saturated adsorption amount at a smaller Na-CMC content than Comparative Slurries C1 to C8 is regarded to be because Na-CMC adsorbed on the graphite surface during the primary mixing process made the graphite surface hydrophilic and improved an interaction of Na-CMC additionally mixed in the secondary mixing process with the graphite.

Since dispersion of graphite in aqueous media is closely related to adsorption of ionic polymers, different adsorption behaviors of Comparative Slurries C1 to C8 and Slurries A1 to A7 may affect dispersibility of the graphite in aqueous slurry.

Adsorption properties of Na-CMC affects dynamic mobility of the graphite. Since a carboxyl group of Na-CMC is ionized in the aqueous media and becomes negatively charged, the more Na-CMC is adsorbed on the graphite surface, the larger absolute value dynamic mobility has. Comparative Slurries C1 to C8 and Slurries A1 to A7 were measured with respect to the dynamic mobility according to Na-CMC added near pH 7.5.

Each sample for measuring the dynamic mobility was prepared by diluting Slurries A1 to A6 and Comparative Slurries C2 to C7 in deionized water at a ratio (a volume ratio of slurry/deionized water) of 3/97 and then, equilibrating them by roller-mixing for 6 hours. Slurries A1 to A6 and Comparative Slurries C2 to C7 were adjusted into pH of 9.5 with a 1 M NaOH solution. Subsequently, the pH-adjusted samples were stabilized by stirring for 60 seconds. In order to evaluate the dynamic mobility (electrokinetic behavior) according to pH, a 0.1 M HNOs solution was injected into each slurry. The dynamic mobility of each slurry was measured by using an electroacoustic analyzer (ESA, ESA-9800, Matec Applied Sciences, USA).

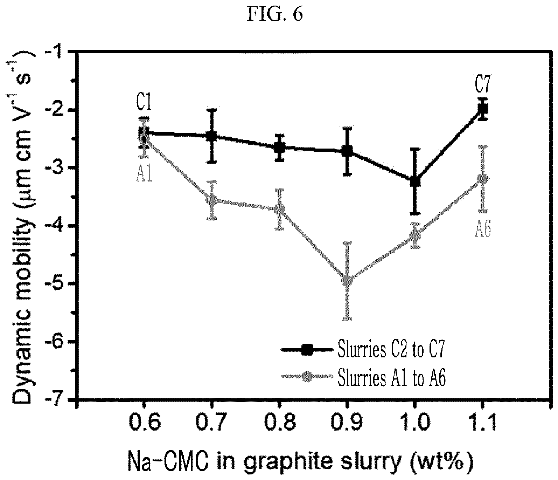

The dynamic mobility results are shown in FIG. 6. FIG. 6 is a graph showing the dynamic mobility of Comparative Slurries C2 to C7 and Slurries A1 to A6 according to a content of Na-CMC near pH 7.5. Referring to FIG. 6, the absolute value of the dynamic mobility increased, as the content of Na-CMC increased, and Comparative Slurries C2 to C7 and Slurries A1 to A6 exhibited a maximum value, when the content of Na-CMC was respectively 1.0 wt% (C6) and 0.9 wt% (A4). The maximum value of the dynamic mobility was obtained at the amount of the adsorbed Na-CMC when saturated.

Slurries A1 to A6, in which graphite was more dispersed due to an improved adsorption amount of Na-CMC, exhibited larger dynamic mobility than Comparative Slurries C2 to C7.

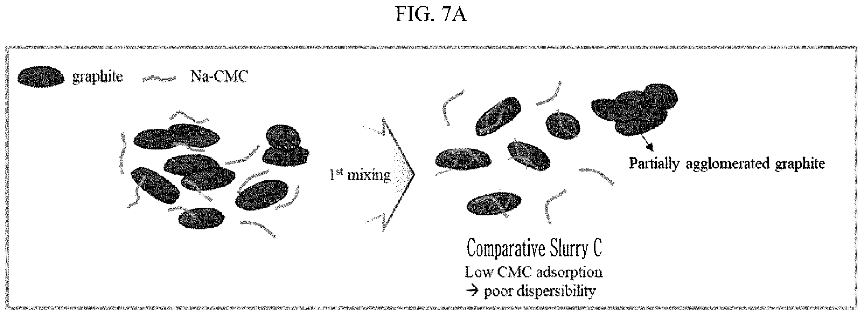

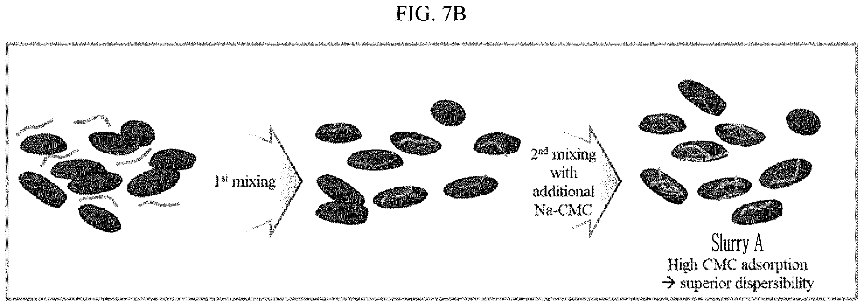

FIGS. 7A and 7B show each Na-CMC adsorption state on graphite in Comparative Slurry C and Slurry A. FIGS. 7A and 7B are schematic views showing each adsorption state of Na-CMC on graphite during the manufacturing process of Comparative Slurry C and Slurry A, respectively.

Referring to FIG. 7A, Na-CMC introduced at once was not much adsorbed on the graphite surface but present in a solvent. The Na-CMC mixture had low dynamic mobility due to the small Na-CMC adsorption amount exhibited disadvantageous dispersion with partial agglomeration of the graphite.

On the contrary, referring to FIG. 7B, Slurry A exhibited that 0.5 wt% of Na-CMC, which was 50% of the total Na-CMC, was completely adsorbed on the graphite surface during the manufacture. This adsorbed Na-CMC made the graphite surface hydrophilic, and the graphite with the hydrophilic surface exhibited improved affinity for additional Na-CMC added during the secondary mixing process, resulting in further increasing the adsorption amount of Na-CMC. Accordingly, Slurry A exhibited excellent dispersion, as the Na-CMC adsorption amount on the graphite surface increased.

**Evaluation Example 2: Particle Size Distribution of Graphite/Na-CMC Slurry**

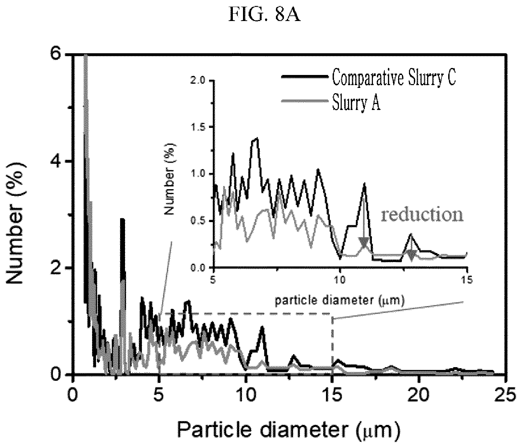

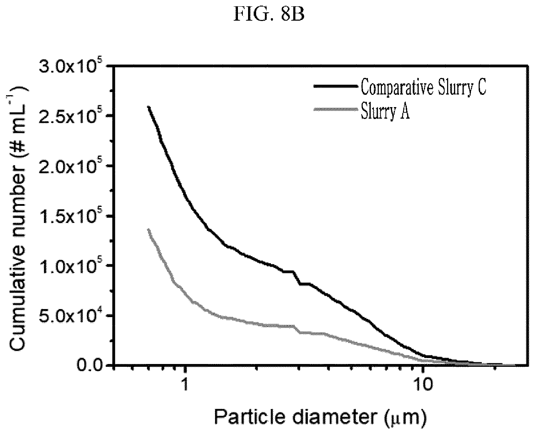

Slurry A and Comparative Slurry C according to Preparation Example A and Comparative Preparation Example C were respectively diluted with deionized water in a ratio (a volume ratio of slurry/deionized water) of 0.2/99.8. A particle size distribution of each diluted slurry was analyzed by using a single particle optical meter (AccuSizer 780, ATI Korea, Korea). The particle size distribution of the diluted slurry was measured by injecting the slurry at a constant flow rate into the single particle optical meter, wherein the flow rate was 15 ml min$^{-1}$. The results are shown in FIGS. 8A and 8B. FIG. 8A is a graph showing the particle size distributions of Slurry A and Comparative Slurry C, and FIG. 8B is a graph showing the cumulative particle size distributions of Slurry A and Comparative Slurry C.

Referring to FIG. 8A, Slurry A had fewer particles with 5 $\mu$m or more than Comparative Slurry C. The reason is that the absolute value of the dynamic mobility was improved, alleviating agglomeration of the graphite. Referring to FIG. 8B, in the cumulative particle size distributions, Slurry A exhibited fewer large particles than Comparative Slurry C.

**Evaluation Example 3: Pore Size Distribution of Negative Electrode**

The negative electrodes of Example A and Comparative Example C were measured with respect to pore size distributions. The pore size distributions of the electrodes were analyzed through mercury intrusion porosimetry (Autopore V 9600, Micromeritics).

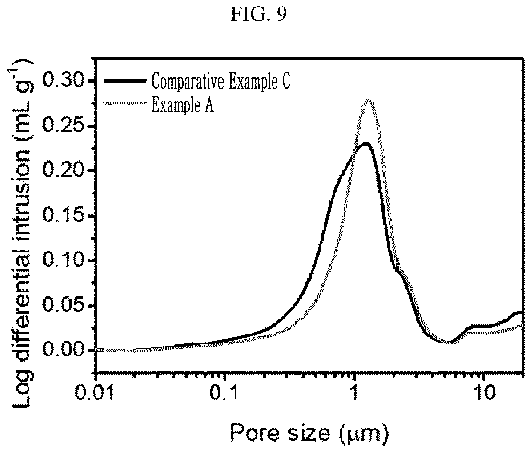

The results are shown in FIG. 9. FIG. 9 is a graph showing the pore size distributions of the negative electrodes of Example A and Comparative Example C.

Referring to FIG. 9, the negative electrodes of Example A and Comparative Example C exhibited a similar average pore size of 1.2 $\mu$m.

Particularly, the negative electrode of Example A had a large number of pores with a size of 1.2 $\mu$m showing a sharp peak, but the negative electrode of Comparative Example C had relatively few pores with a size of 1.2 $\mu$m showing a broad peak but lots pores with a size of less than 1$\mu$m and greater than 8 $\mu$m.

The reason is that the negative electrode of Example A exhibited a uniform pore structure due to excellent dispersion of Slurry A, but the negative electrode of Comparative Example C had a non-uniform pore structure after the drying due to Comparative Slurry C with relatively deteriorated dispersion.

**Evaluation Example 4: Electrical Conductivity and Ionic Resistance of Negative Electrode**

Electrical conductivity and ionic resistance ($R_{ion}$) are closely related to a pore distribution of an electrode, which plays an important role in electrochemical performance. In order to confirm this, the negative electrodes of Examples A and B and Comparative Example C were measured with respect to electrical conductivity and ionic resistance. The results are shown in Table 1.

The electrical conductivity of the electrodes was calculated through a Van der Pauw method by using a multifunction ammeter (Multimeter 2000/E, Keithley, USA). The ionic resistance of the electrodes was measured through electrochemical impedance spectroscopy (EIS) of negative electrode symmetric cells including the negative electrodes. The negative electrodes were obtained through a circular electrode punching machine (Wellcos Corporation, WCH-125) with a diameter of 14 mm, where the electrode area (d) is 1.54 cm$^2$. $R_{ion}$ was calculated by tripling a difference between 'a' and 'b' in the obtained EIS spectra, where 'a' represents the x-intercept value and 'b' signifies the $Z_{re}$ value at the point at which the slope increases sharply.

[Table 1]

|  | Electrical conductivity (S cm$^{-1}$) | $R_{ion}$ ($\Omega$) |
|---|---|---|
| Comparative Example C | 44 | 13.1 |
| Example A | 57 | 12.0 |
| Example B | 59 | 10.6 |

Referring to Table 1, the negative electrodes of Examples A and B respectively exhibited electrical conductivity of 57 S cm$^{-1}$ and 59 S cm$^{-1}$, which were greater than or equal to 30% higher than the negative electrode (44 S cm$^{-1}$) of Comparative Example C. In addition, the negative electrodes of Examples A and B and Comparative Example C respectively exhibited $R_{ion}$ of 12.0, 10.6, and 13.1 $\Omega$.

This result was obtained, because excellent dispersion in Slurry A and Slurry B contributed to improving graphite contact structures in the negative electrodes.

**Evaluation Example 5: MacMullin Number of Negative Electrode**

In order to analyze electrolyte transfer with ignoring other variables, for example, a thickness of a negative electrode and conductivity and the like of an electrolyte, MacMullin number ($N_M$) was calculated according to Equation 1:
[Equation 1]

$$N_M = \frac{R_{ion} \cdot A \cdot \sigma_0}{d} \quad (1)$$

wherein $R_{ion}$ is ionic resistance ($\Omega$) of an electrode, A is an area (cm$^2$) of the electrode, $\sigma_0$ is ionic conductivity (S cm$^{-1}$) of an electrolyte, and d is a thickness ($\mu$m) of the electrode.

Table 2 shows values required for calculating $N_M$ of the negative electrodes of Examples A and B and Comparative Example C.

[Table 2]

| | $R_{ion}$ ($\Omega$) | A cm$^2$ | $\sigma_o$ (S cm$^{-1}$) | d ($\mu$m) |
|---|---|---|---|---|
| Comparative Example C | 13.1 | | | |
| Example A | 12.0 | 1.54 | $7.7 \times 10^{-3}$ | 59 |
| Example B | 10.6 | | | |

In Table 2, the ionic conductivity of the electrolyte was obtained from the electrolyte manufacturer (Starlyte from Panax Etec Co., Ltd., Busan, Korea). The electrode thickness was measured using a micrometer (SM293-025, Sincon).

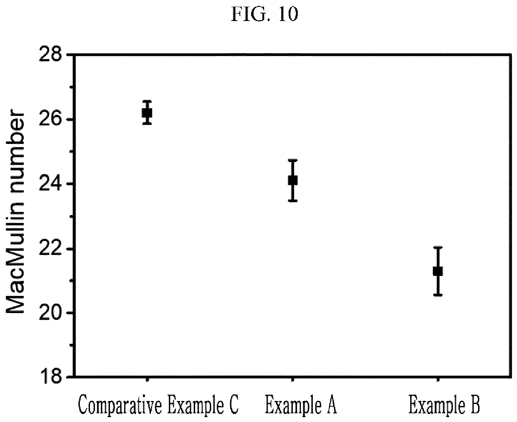

The MacMullin number ($N_M$) results of the negative electrodes of Examples A and B and Comparative Example C are shown in FIG. 10. FIG. 10 is a graph showing the MacMullin number ($N_M$) results of the negative electrodes according to Examples A and B and Comparative Example C. Referring to FIG. 10, the negative electrodes of Example A and B respectively exhibited $N_M$ of 24.1 and 21.3, which were decreased from $N_M$ of 26.2 of the negative electrode of Comparative Example C. The reason is that Li-ion kinetics of the negative electrodes of Examples A and B was improved by controlling Na-CMC adsorption behaviors on the graphite surface.

Particularly, that $N_M$ of the negative electrode of Example B was significantly decreased was because formation of a LiF-rich SEI layer reduced $E_{ct}$ and thereby, improved the Li-ion kinetics. This will be explained in Evaluation Example 6 in detail.

**Evaluation Example 6: Charge Transfer Activation Energy ($E_{ct}$) of Negative Electrode**

As shown in the adsorption isotherm results of FIG. 5, in the slurry of Comparative Preparation Example C, when the Na-CMC content was 0.5 wt% (Comparative Preparation Example C1), Na-CMC was completely adsorbed on the surface of an active material.

The adsorbed Na-CMC (ionic polymer) on the active material surface may modify SEI (solid electrolyte interphase) and thus affect lithium ion transfer between the active material and an electrolyte.

Charge transfer activation energy ($E_{ct}$) is a useful indicator for evaluating Li-ion kinetics. $E_{ct}$ is mainly caused by desolvation of Li ions and transfer of the Li ions through an SEI layer, wherein the SEI layer acts as a charge transfer barrier for the Li-ions in a battery.

$E_{ct}$ is calculated by Arrhenius Formula according to Equation 2:
[Equation 2]

$$\frac{\partial(^1/_{R_{ct}})}{\partial \cdot (^1/_T)} = -\frac{\cdot E_{ct}}{2.303R} \cdots (2)$$

wherein, in Equation 2, $R_{ct}$ indicates charge transfer resistance ($\Omega$), T indicates a temperature of Kelvin (K), $E_{ct}$ indicates charge transfer activation energy (kJ mol$^{-1}$), and R indicates a gas constant (8.314 J mol$^{-1}$ K$^{-1}$).

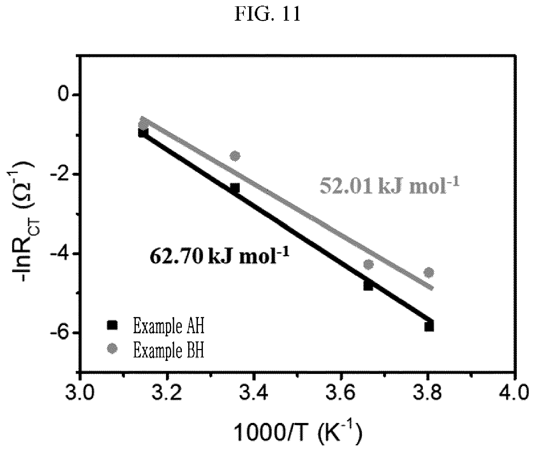

The charge transfer activation energy ($E_{ct}$) results of the half-cells of Example AH and Example BH are shown in FIG. 11. FIG. 11 is a graph showing the charge transfer activation energy ($E_{ct}$) results of the half-cells according to Example AH and Example BH.

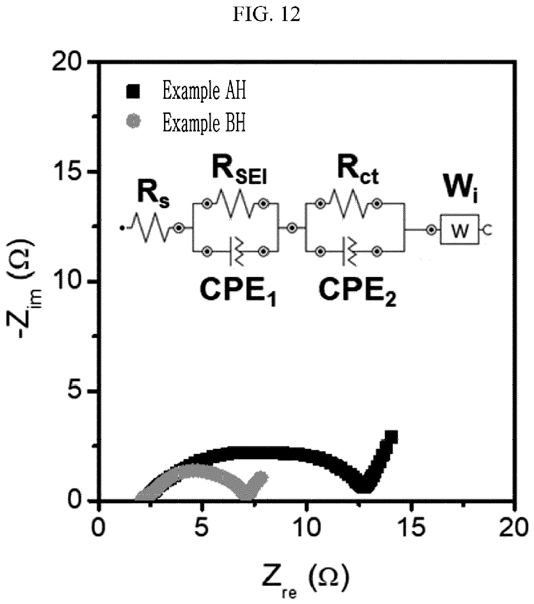

In order to calculate the charge transfer activation energy ($E_{ct}$) of the half-cells of Example AH and Example BH, EIS spectra from -10 °C to 45 °C were measured and then, shown in FIG. 12. FIG. 12 shows EIS spectra of the half-cells according to Examples AH and BH after a formation cycle at 25 °C.

Referring to FIGS. 11 and 12, the half-cell according to Example BH exhibited $E_{ct}$ of 52.01 kJ mol$^{-1}$, which was 17% lower than 62.70 kJ mol$^{-1}$ of the half-cell according to Example AH. This low $E_{ct}$ confirmed improved Li-ion kinetics of the half-cell according to Example BH.

**Evaluation Example 7: Analysis of SEI Layer of Negative Electrode**

An SEI layer has a significant effect on Li-ion kinetics and the corresponding electrochemical characteristics such as cycle stability and rate capability characteristics of rechargeable lithium batteries. In order to examine a chemical composition of the SEI layer, a high-resolution X-ray photoelectron spectroscopy (XPS) analysis was performed with respect to the half-cells according to Example AH and Example BH after 10 cycles at 1.0 C. Before the XPS analysis, all the samples were sealed in a glove box filled with argon gas. The XPS analysis was performed by using K-Alpha$^+$ (Thermo Fisher Scientific Co., USA). All XPS spectra were collected by referencing a C 1s peak to 284.8 eV.

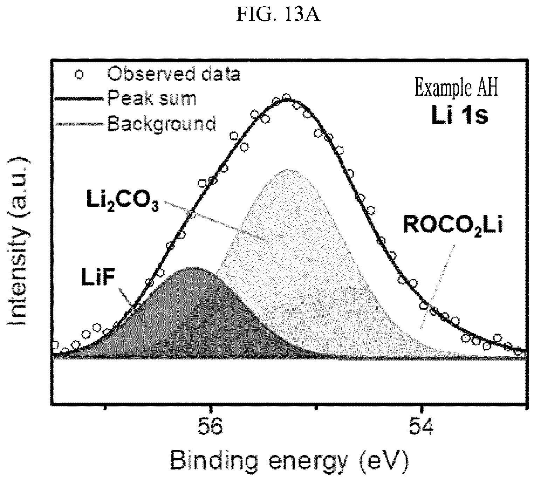

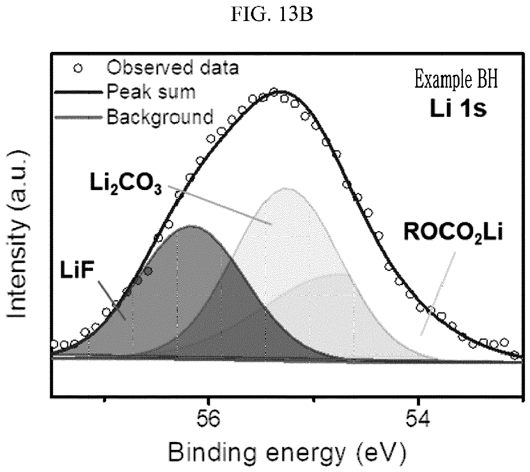

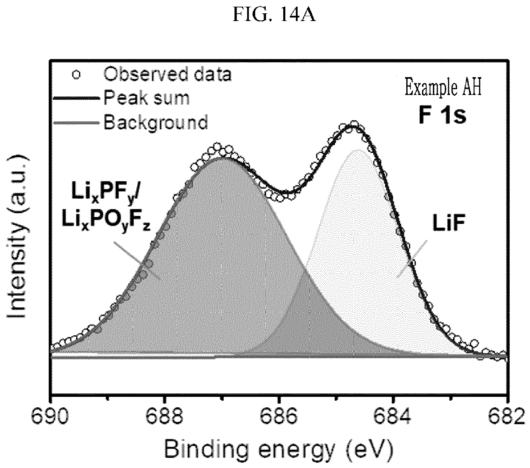

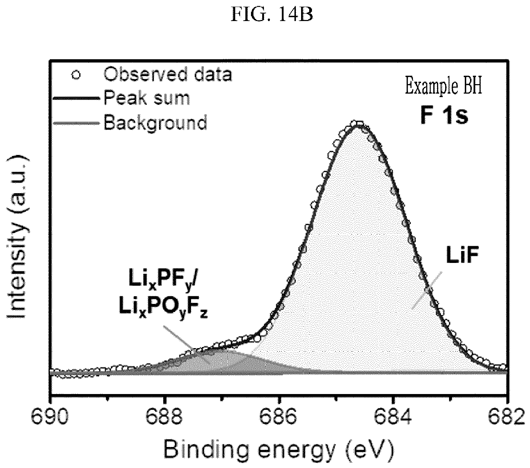

The results are shown in FIGS. 13A, 13B, 14A, and 14B. FIGS. 13A, 13B, 14A, and 14B show the high-resolution X-ray photoelectron spectroscopy (XPS) analysis results of the negative electrodes according to Examples AH and BH after 10 cycles at 1.0 C.

Referring to FIG. 13A, in the negative electrode according to Example AH, a Li 1s peak could be deconvoluted into LiF, $Li_2CO_3$, and $ROCO_2Li$ peaks at 56.2, 55.2, and 54.7 eV, which exhibited each ratio of 0.21, 0.51, and 0.28.

Referring to FIG. 13B, the Li 1s peak of the negative electrode according to Example BH could be deconvoluted into LiF, $Li_2CO_3$, and $ROCO_2Li$ peaks, which exhibited each ratio of 0.31, 0.40, and 0.29.

LiF provides an inorganic SEI layer with low $E_{ct}$ and high Li-ion kinetics. Accordingly, the excellent Li-ion kinetics of the negative electrode with low $E_{ct}$ according to Example BH was achieved due to a higher LiF ratio than the negative electrode according to Example AH.

Referring to FIG. 14A, from an F 1s spectrum of the negative electrode according to Example AH, $Li_xPF_y/Li_x$-$PO_yF_z$ and LiF peaks were found at each 687.0 eV and 684.6 eV.

Referring to FIG. 14B, in the F 1s spectra, the negative electrode of Example BH exhibited an SEI layer with more LiF than the negative electrode of Example AH, which was consistent with the Li 1s XPS spectrum.

**Evaluation Example 8: Electrochemical Characteristics of Half-cell**

The half-cells of Example AH and Comparative Example CH were evaluated with respect to electrochemical characteristics.

Table 3 shows charge capacity and coulombic efficiency of the half-cells of Example AH and Comparative Example CH within a voltage window of 0.01 to 1.2 V vs. Li/Li$^+$ at 0.1 C during the initial charge and discharge.

[Table 3]

|  | Charge (delithiation) capacity (mAh g$^{-1}$) | Coulombic efficiency (%) |
|---|---|---|
| Example AH | 350.23 | 94.6 |
| Comparative Example CH | 347.12 | 93.9 |

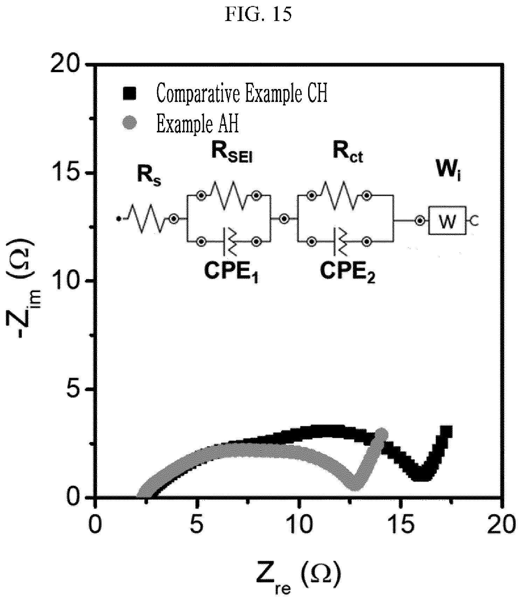

EIS spectra of the half-cells of Example AH and Comparative Example CH were examined after two formation cycles at 0.1 C and 0.2 C in a CC-CV charge mode and a CC discharge mode. The results are shown in FIG. 15. FIG. 15 is a graph showing the EIS spectra of the half-cells according to Example AH and Comparative Example CH.

Referring to FIG. 15, the half-cell according to Example AH exhibited a lower charge transfer resistance ($R_{ct}$) than the half-cell of Comparative Example CH. This result is well consistent with the electrical conductivity and $R_{ion}$ results of the negative electrode of Evaluation Example 4.

**Evaluation Example 9: Electrochemical Characteristics of Full-cell**

Each of the full cells of Examples AF and BF and Comparative Example CF was measured with respect to discharge capacity and coulombic efficiency from the initial voltage profiles at 0.1 C, and the results are shown in Table 4.

[Table 4]

|  | Discharge capacity (mAh g$^{-1}$) | Coulombic efficiency (%) |
|---|---|---|
| Example AF | 154.58 | 87.9 |
| Example BF | 156.98 | 89.4 |
| Comparative Example CF | 149.78 | 87.2 |

Referring to Table 4, the full cells of Examples AF and BF exhibited improved discharge capacity and coulombic efficiency, compared with the full cell of Comparative Example CF.

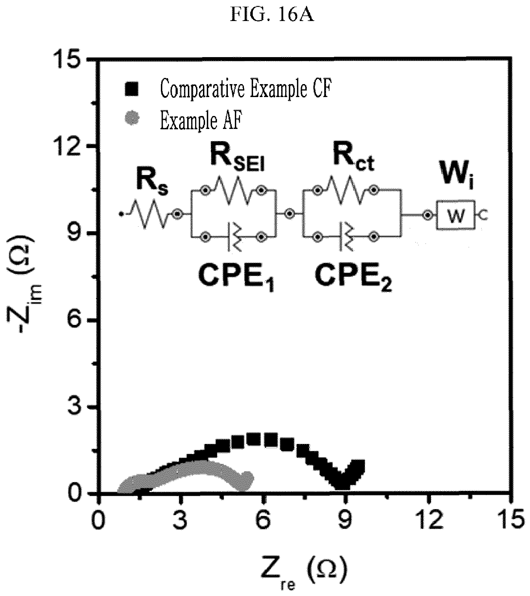

In order to evaluate $R_{ct}$ of the full cells of Examples AF and BF and Comparative Example CF after the 0.1 C and 0.2 C formation cycles, an EIS analysis was performed. FIG. 16A shows EIS spectra of the coin-type full-cells according to Example AF and Comparative Example CF after two formation cycles at 0.1 C and 0.2 C. Referring to FIG. 16A, the full cell of Example AF exhibited $R_{ct}$ of 4.3 Ω, which was 44.5% lower than $R_{ct}$ of 7.7 Ω of the full cell of Comparative Example CF.

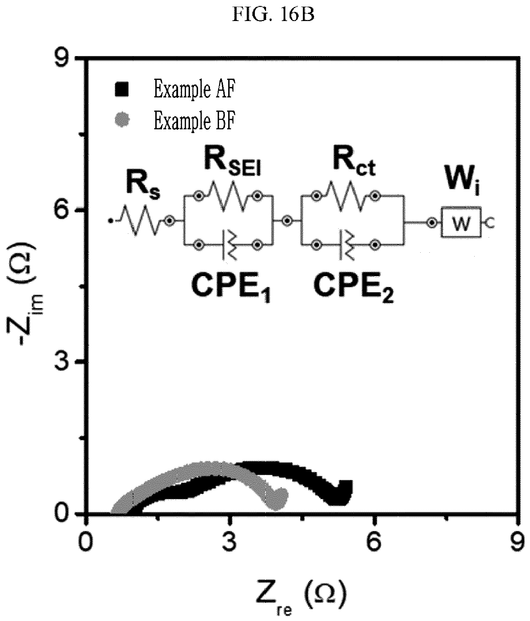

FIG. 16B shows EIS spectra of the coin-type full cells of Example AF and Example BF after the two formation cycles at 0.1 C and 0.2 C. Referring to FIG. 16B, the full cell of Example BF exhibited $R_{ct}$ of 3.3 Ω, which was 33% lower than the full cell (4.4 Ω) of Example AF.

Referring to FIGS. 16A and 16B, the full cells of Examples AF and BF exhibited lower deconvolution due to improved $R_{ct}$ than the full cell of Comparative Example AF at current density of 2.0 C during the first charge/discharge.

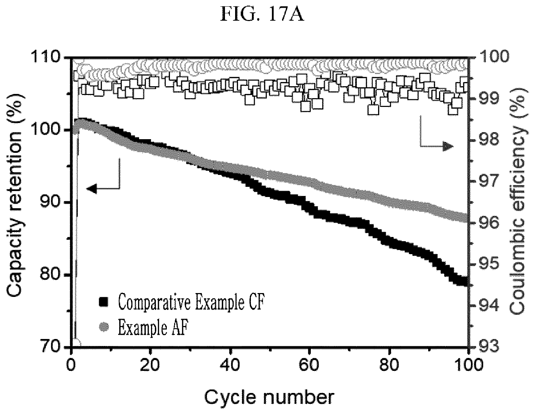

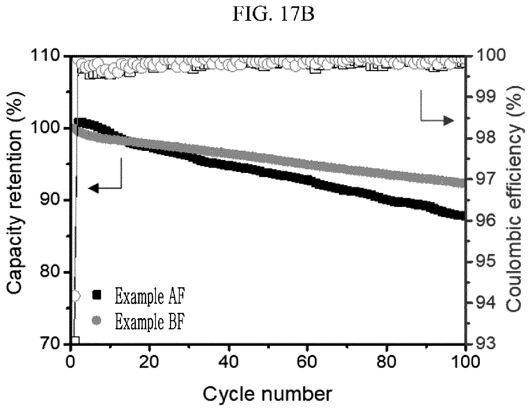

The full cells of Examples AF and BF and Comparative Example CF were once and 100 times charged and discharged at current density of 2.0 C after the 0.1 C and 0.2 C formation cycles and then, measured with respect to charge/discharge capacity, and the results are shown in FIGS. 17A and 17B and Table 5.

[Table 5]

| | 1st charge capacity (mAh g$^{-1}$) | 1st discharge capacity (mAh g$^{-1}$) | 100th charge capacity (mAh g$^{-1}$) | 100th discharge capacity (mAh g$^{-1}$) | Capacity retention after 100 cycles (%) |
|---|---|---|---|---|---|
| Example AF | 163.81 | 153.33 | 127.66 | 127.48 | 87.76 |
| Example BF | 164.79 | 155.18 | 143.38 | 143.29 | 92.34 |
| Comparative Example CF | 153.15 | 141.90 | 112.80 | 111.99 | 78.92 |

FIG. 17A is a graph showing capacity retention rates of the full-cells according to Example AF and Comparative Example CF after the 100 cycles at 2.0 C, and FIG. 17B is a graph showing capacity retention rates after 100 cycles at 2.0 C for full-cells according to Examples AF and BF.

Referring to FIGS. 17A and 17B and Table 5, the full cells of Examples AF and BF exhibited improved capacity retention, compared with the full cell (78.92%) of Comparative Example CF. Accordingly, cycle capacity retention of the full cells were improved due to improved electrical conductivity and $R_{ion}$ in the negative electrodes of Examples A and B.

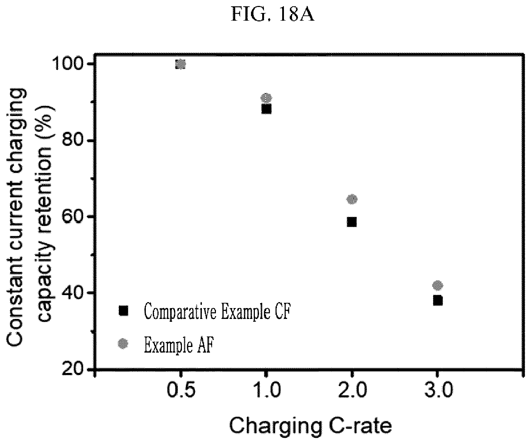

In order to evaluate high-rate charging characteristics, capacity retention of the full cells was evaluated by increasing a charging rate of the full cells of Examples AF and BF and Comparative Example CF to 3.0 C under the constant current (CC) condition, while fixing a discharging rate at 0.5 C. The results are shown in FIG. 18A.

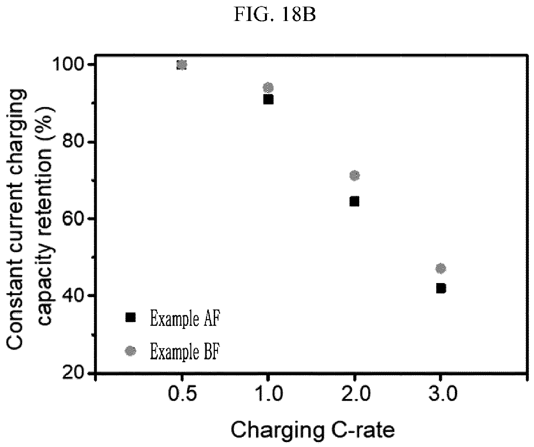

FIG. 18A is a graph showing capacity retention according to a charging rate of the full-cells according to Example AF and Comparative Example CF, and FIG. 18B is a graph showing capacity retention according to a charging rate of the full-cells according to Example AF and Example BF.

Referring to FIGS. 18A and 18B, the full cell of Comparative Example CF exhibited charge capacity retention of 88.22%, 58.67%, and 38.10% at each charging rate of 1.0, 2.0, and 3.0 C, but the full cell of Example AF exhibited charge capacity retention of 91.06%, 64.57%, and 42.05% at each charging rate of 1.0, 2.0, and 3.0 C, and the full cell of Example BF exhibited charge capacity retention of 94.11%, 71.27%, 47.20% at each charging rate of 1.0, 2.0, and 3.0 C.

Referring to FIGS. 18A and 18B, the full cells of Examples AF and BF exhibited higher charge capacity retention than the full cell of Comparative Example AF at 3.0 C, which confirms excellent high-rate charging characteristics.

While this disclosure has been described in connection with what is presently considered to be practical example embodiments, it is to be understood that the invention is not limited to the disclosed embodiments. On the contrary, it is intended to cover various modifications and equivalent arrangements included within the scope of the appended claims.

**<Description of Symbols>**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |

(continued)

71: positive electrode tab          72: negative electrode tab

**Claims**

1. A method of manufacturing an electrode for a rechargeable lithium battery, comprising

   mixing an electrode active material and a first ionic polymer to prepare a first slurry,
   mixing the first slurry and a second ionic polymer to prepare a second slurry,
   mixing the second slurry and a water-soluble binder to prepare an electrode active material layer slurry, and
   coating the electrode active material layer slurry on a current collector, drying and compressing to manufacture an electrode for a rechargeable lithium battery,
   wherein an amount of the first ionic polymer is about 20 to about 90 wt% based on a total amount of 100 wt% of the first ionic polymer and the second ionic polymer.

2. The method of claim 1, wherein
   the electrode active material includes a negative electrode active material or a positive electrode active material.

3. The method of claim 2, wherein
   the negative electrode active material includes a carbon-based negative electrode active material, a silicon-carbon composite, or a combination thereof.

4. The method of claim 2, wherein
   the negative electrode active material includes crystalline carbon, amorphous carbon, or a combination thereof.

5. The method of claim 2, wherein
   the negative electrode active material includes graphite, a silicon-carbon composite, or a combination thereof.

6. The method of any one of claims 1 to 5, wherein
   the first ionic polymer and second ionic polymer include cellulose-based compounds.

7. The method of any one of claims 1 to 5, wherein
   the first ionic polymer and second ionic polymer include carboxylmethyl cellulose, hydroxypropylmethyl cellulose, methyl cellulose, an alkali metal salt thereof, or a combination thereof.

8. The method of any one of claims 1 to 7, wherein:

   (i) the first ionic polymer and second ionic polymer are the same or different; and/or
   (ii) the first ionic polymer is a lithium-containing cellulose-based compound, and the second ionic polymer is a sodium-containing cellulose-based compound.

9. The method of any one of claims 1 to 8, wherein:

   (i) an amount of the first ionic polymer is about 40 to about 60 wt% based on a total amount of 100 wt% of the first ionic polymer and the second ionic polymer; and/or
   (ii) the total amount of the first ionic polymer and the second ionic polymer is about 0.1 wt% to about 3 wt% based on 100 wt% of the electrode active material layer.

10. The method of any one of claims 1 to 9, wherein
    the water-soluble binder includes a rubber-based binder, a polymer resin binder, or a combination thereof.

11. The method of claim 10, wherein:

    (i) the rubber-based binder includes a styrene-butadiene rubber, an acrylated styrene-butadiene rubber, an acrylonitrile-butadiene rubber, an acrylic rubber, a butyl rubber, a fluorine rubber, or a combination thereof; and/or
    (ii) the polymer resin binder includes polyethylene oxide, polyvinylpyrrolidone, polyacrylonitrile, an ethylene propylene diene copolymer, polyvinylpyridine, chlorosulfonated polyethylene, latex, a polyester resin, an acrylic resin, a phenol resin, an epoxy resin, a polyvinyl alcohol, or a combination thereof.

12. The method of any one of claims 1 to 11, wherein
the water-soluble binder is included in an amount of about 0.1 wt% to about 10 wt% based on 100 wt% of the electrode active material layer.

13. An electrode for a rechargeable lithium battery manufactured according to the method of any one of claims 1 to 12.

14. The electrode of claim 13, wherein
a MacMullin number ($N_M$) of the electrode calculated using Equation 1 is less than or equal to about 25:
[Equation 1]

$$N_M = \frac{R_{ion} \cdot A \cdot \sigma_0}{d} \quad (1)$$

wherein $R_{ion}$ is the ionic resistance of the electrode ($\Omega$), A is an area of the electrode ($cm^2$), $\sigma_o$ is the ion conductivity of the electrolyte ($S\ cm^{-1}$), and d is the thickness of the electrode ($\mu m$).

15. A rechargeable lithium battery, comprising the electrode manufactured according to the method of any one of claims 1 to 12.

FIG. 1

## FIG. 2

100

EP 4 362 127 A1

FIG. 3

FIG. 4

FIG. 5

FIG. 6

FIG. 7A

graphite    Na-CMC

1st mixing

Partially agglomerated graphite

Comparative Slurry C
Low CMC adsorption
→ poor dispersibility

EP 4 362 127 A1

1st mixing

2nd mixing
with
additional
Na-CMC

Slurry A
High CMC adsorption
→ superior dispersibility

EP 4 362 127 A1

FIG. 8A

FIG. 8B

FIG. 9

FIG. 10

FIG. 11

FIG. 12

FIG. 13A

FIG. 13B

FIG. 14A

FIG. 14B

FIG. 15

FIG. 16A

FIG. 16B

FIG. 17A

FIG. 17B

FIG. 18A

FIG. 18B

Europäisches
Patentamt

European
Patent Office

Office européen
des brevets

# EUROPEAN SEARCH REPORT

Application Number

EP 23 20 4853

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2022 0127615 A (SK ON CO LTD [KR]) 20 September 2022 (2022-09-20) * abstract * * paragraphs [0031] – [0038] * * paragraphs [0041] – [0057] * * claims 1-16 * | 1-15 | INV. H01M4/04 H01M4/62 H01M10/0525 |
| X | JP 2005 129482 A (SANYO ELECTRIC CO) 19 May 2005 (2005-05-19) * abstract * * paragraphs [0007] – [0021] * * claims 1-8 * * examples 1-3 * | 1-15 | |
| A | EP 3 709 399 A1 (SAMSUNG SDI CO LTD [KR]) 16 September 2020 (2020-09-16) * abstract * * paragraphs [0021] – [0028] * * paragraphs [0040] – [0043] * * claims 1-12 * | 1-15 | |
| A | US 2015/147627 A1 (TAKANO YASUO [JP]) 28 May 2015 (2015-05-28) * abstract * * claims 1-12 * | 1-15 | TECHNICAL FIELDS SEARCHED (IPC) H01M |
| A | EP 3 985 758 A1 (SAMSUNG SDI CO LTD [KR]) 20 April 2022 (2022-04-20) * abstract * * example 1 * * paragraphs [0005] – [0026] * * claims 1-15 * | 1-15 | |

The present search report has been drawn up for all claims

| Place of search | Date of completion of the search | Examiner |
|---|---|---|
| Munich | 18 March 2024 | Stachowiak, Olaf |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 20 4853

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2024

| Patent document cited in search report | Publication date | Patent family member(s) | Publication date |
|---|---|---|---|
| KR 20220127615 A | 20-09-2022 | NONE | |
| JP 2005129482 A | 19-05-2005 | JP 4488779 B2 | 23-06-2010 |
| | | JP 2005129482 A | 19-05-2005 |
| EP 3709399 A1 | 16-09-2020 | CN 111295781 A | 16-06-2020 |
| | | EP 3709399 A1 | 16-09-2020 |
| | | KR 20190051606 A | 15-05-2019 |
| | | US 2020335795 A1 | 22-10-2020 |
| | | US 2023006212 A1 | 05-01-2023 |
| | | US 2023017229 A1 | 19-01-2023 |
| | | US 2023028390 A1 | 26-01-2023 |
| | | WO 2019093634 A1 | 16-05-2019 |
| US 2015147627 A1 | 28-05-2015 | NONE | |
| EP 3985758 A1 | 20-04-2022 | CN 114430028 A | 03-05-2022 |
| | | EP 3985758 A1 | 20-04-2022 |
| | | US 2022115665 A1 | 14-04-2022 |
| | | US 2024030446 A1 | 25-01-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. PARK ; D. LEE ; T. SONG.** *Ind. Eng. Chem. Res.,* 2018, vol. 57, 8895-8901